# EUROPEAN PATENT APPLICATION

(11) **EP 3 719 069 A1**
(43) Date of publication of application: **07.10.2020**
(21) Application number: 18882821.4
(22) Date of filing: 28.11.2018
(51) Int. Cl.: C08L 23/10, C08J 3/20, C08J 3/22, C08L 53/02

(54) **POLYPROPYLENE RESIN COMPOSITION**

(30) Priority: 29.11.2017 JP 2017228822
(71) Applicant: Kao Corporation, Chuo-Ku Tokyo 103-8210 (JP)
(72) Inventor: ODA, Yoshiro, Wakayama-shi Wakayama 640-8580 (JP); SATO, Keito, Wakayama-shi Wakayama 640-8580 (JP)
(74) Representative: Hoffmann Eitle
(86) International application number: PCT/JP2018/043867
(87) International publication number: WO 2019/107449

(57) **Abstract**

The present invention relates to a polypropylene resin composition containing a polypropylene resin, an elastomer having a polar functional group, and a filler. The polypropylene resin composition of the present invention can be suitably used in manufactured articles of audio equipment, electric appliances, transportation vehicles, construction buildings, industrial equipment, and the like.

## Description

### FIELD OF THE INVENTION

The present invention relates to a polypropylene resin composition and a method for producing the same. More specifically, the present invention relates to a polypropylene resin composition usable as a vibration-damping material in audio equipment, electric appliances, transportation vehicles, construction buildings, industrial equipment, and the like, and a method for producing the same, additives for offering vibration-damping properties to the resin composition, and a vibration-damping material containing the polypropylene resin composition.

### BACKGROUND OF THE INVENTION

In the recent years, countermeasures for vibrations of various equipment have been required, and especially, the countermeasures are in demand in fields of automobiles, household electric appliances, precision instruments, and the like. In general, materials having high vibration-damping properties include materials in which a metal plate and a vibration-absorbing material such as a rubber or asphalt are pasted together, or composite materials such as vibration-damping steel plates in which a vibration-absorbing material is sandwiched with metal plates. These vibration-damping materials retain the form of a metal plate having high rigidity while absorbing vibrations with a vibration-absorbing material. In addition, vibration-damping materials include alloy materials in which kinetic energy is converted to thermal energy utilizing twinning or ferromagnetization to absorb vibrations even when metals alone are used. However, there are some disadvantages that the composite materials have limitations in molding processability because different materials are pasted together, and that a manufactured product itself becomes heavy because a metal steel plate is used. In addition, the alloy materials are also heavy because of use of metals alone, and further have been insufficient in vibration-damping properties.

In view of the conventional techniques mentioned above, a functional resin composition having a vibration-damping function has been proposed. For example, Patent Publication 1 discloses a molded article made of a vibration-damping resin which includes resin components in which a crystalline polypropylene (PP) is added and blended with a high-density polyethylene (PE) or an aromatic hydrocarbon resin, and
a polypropylene resin composition blended with a reinforcing inorganic filler,
wherein the resin components are molded with the polypropylene resin composition,
characterized in that the above resin composition includes resin components are further added and mixed with a hydrogenated additive of an aromatic vinyl-conjugated diene-based block copolymer.

Patent Publication 1: Japanese Patent Laid-Open No. Hei-5-331329

### SUMMARY OF THE INVENTION

The present invention relates to the following [1] to [6]:
[1] A polypropylene resin composition containing a polypropylene resin, an elastomer having a polar functional group, and a filler.
[2] A method for producing a polypropylene resin composition, including melt-kneading a polypropylene resin with additives containing a melt-kneaded product of an elastomer having a polar functional group and a filler.
[3] A method for producing a polypropylene resin composition including melt-kneading an elastomer having a polar functional group, a filler, and a polypropylene resin.
[4] The method according to the above [3], wherein a preliminary kneaded product A containing a polypropylene resin and a filler is melt-kneaded with a preliminary kneaded product B containing a polypropylene resin, an elastomer having a polar functional group and a filler, whereby the melt-kneading of the elastomer having a polar functional group, the filler, and the polypropylene resin is carried out.
[5] Additives containing a melt-kneaded product of an elastomer having a polar functional group and a filler.
[6] A vibration-damping material containing a polypropylene resin composition as defined in the above [1], or a polypropylene resin composition produced by a method for production as defined in any one of the above [2] to [4].

### DETAILED DESCRIPTION OF THE INVENTION

However, in the polypropylene resin composition of Patent Publication 1, although the vibration-damping properties at room temperature are improved, the improvements in the vibration-damping properties in high-temperature regions are small, and the flexural modulus is undesirably decreased.

The present invention relates to a polypropylene resin composition having excellent vibration-damping properties in a wide temperature region while maintaining elastic modulus and a method for producing the same, additives for the resin composition, and a vibration-damping material containing the polypropylene resin composition.

According to the present invention, a polypropylene resin composition having excellent vibration-damping properties while maintaining elastic modulus and a method for producing the same, additives for the resin composition, and a vibration-damping material containing the polypropylene resin composition can be provided.

The present inventors have newly found out that the vibration-damping properties of the polypropylene resin composition are improved while maintaining elastic modulus by causing some sorts of chemical bonding between an elastomer and a filler added to the polypropylene resin composition to reinforce an interface thereof. In addition, as compared to a case where an interface between an elastomer and a filler is not reinforced as in Patent Publication 1, it could be seen that the vibration-damping properties and the impact resistance are further improved. Although this mechanism is not ascertained, it is assumed that the distortion energy can be increased in the elastomer by reinforcing the interface between the elastomer and the filler.

The polypropylene resin composition of the present invention contains a polypropylene resin, an elastomer having a polar functional group, and a filler.

### [Polypropylene Resin]

The polypropylene resin refers to a resin containing repeating units of a propylene group in the main chain of the polymer preferably in an amount of 30 mol or more. In the present invention, a polypropylene homopolymer, a random polypropylene, a block polypropylene, a chlorinated polypropylene, a carboxylic acid-modified polypropylene, and derivatives thereof, and mixtures thereof can be used without particular limitations.

The polypropylene resin used in the present invention is not particularly limited, and the polypropylene resin preferably having a weight-average molecular weight of from 5,000 to 500,000 or the like can be used.

As to the flowability of the polypropylene resin, for example, it is desired that the melt flow rate (MFR) of the polypropylene resin, when measured as prescribed in JIS K7210, is preferably 2.0 g/10 min or more, and more preferably 4. 0 g/10 min or more, and on the other hand, the melt flow rate is preferably 50 g/10 min or less, and more preferably 30 g/10 min or less, from the viewpoint of easiness in the mold processability.

The melting point of the polypropylene resin is preferably 120°C or higher, and more preferably 125°C or higher, and on the other hand, the melting point is preferably 170°C or lower, and more preferably 165°C or lower.

The amount of the polypropylene resin in the polypropylene resin composition of the present invention is preferably 35% by mass or more, more preferably 45% by mass or more, and even more preferably 55% by mass or more, from the viewpoint of obtaining a molded article or a vibration-damping material that exhibits a desired elastic modulus. On the other hand, the amount is preferably 85% or less, more preferably 75% or less, and even more preferably 65% or less, from the viewpoint of obtaining a molded article or a vibration-damping material that exhibits a desired vibration-damping properties.

### [Elastomer Having Polar Functional Group]

The details of the polar functional group of the elastomer having a polar functional group and the elastomer will be described later. The elastomer as described above includes, for example, maleic anhydride-modified polystyrene-hydrogenated polybutadiene copolymers (SEBS), maleic anhydride-modified polystyrene-isobutylene-polystyrene block copolymers (SIBS), maleic anhydride-modified polystyrene-ethylene-butylene-polyolefin block copolymers (SEBC), epoxy-modified polystyrene-hydrogenated polybutadiene copolymers (SEBS), and the like, and the maleic anhydride-modified SEBS is preferred, from the viewpoint of improving the vibration-damping properties and the impact resistance. The elastomer having a polar functional group can be used alone or in two or more kinds.

In the polypropylene resin composition of the present invention, the content of the elastomer having a polar functional group, based on 100 parts by mass of the polypropylene resin, is preferably 5 parts by mass or more, more preferably 10 parts by mass or more, and even more preferably 15 parts by mass or more, from the viewpoint of improving vibration-damping properties, and the content is preferably 60 parts by mass or less, more preferably 50 parts by mass or less, even more preferably 40 parts by mass or less, still even more preferably 35 parts by mass or less, and still even more preferably 30 parts by mass or less, from the viewpoint of inhibiting the decrease in flexural modulus. Here, in a case where two or more kinds of the elastomer having a polar functional group are contained, the content is a total amount thereof.

The polar functional group of the elastomer having a polar functional group is not particularly limited so long as the polar functional group is capable of binding to the filler, which includes for example, an ester group, an amide group, a hydroxyl group, a carboxy group, an amino group, an acid anhydride group, an epoxy group, a carbodiimide group, and the like, preferably a hydroxyl group, a carboxy group, an amino group, an acid anhydride group, or an epoxy group, which is a reactive functional group, more preferably an acid anhydride group or an epoxy group, even more preferably an acid anhydride group, and even more preferably a maleic anhydride group, from the viewpoint of reactivities. Another group (for example, a carbodiimide group or the like) may be bonded to the acid anhydride group. The polar functional group to be introduced into the elastomer may be one kind or two or more kinds.

The amount of the polar functional group added is not particularly limited, and can be properly selected depending upon the kinds of the polar functional group and the elastomers. For example, in an embodiment where the elastomer having a polar functional group is a maleic anhydride-modified elastomer such as a maleic anhydride-modified polystyrene-hydrogenated polybutadiene copolymer (SEBS), the amount of the polar functional group, based on 100 parts by mass of the elastomer before addition, is preferably 0.05 parts by mass or more, more preferably 0.1 parts by mass or more, and even more preferably 0.3 parts by mass or more, from the viewpoint of inhibiting the decrease in elastic modulus and improving the vibration-damping properties and the impact resistance. On the other hand, the amount is preferably 10 parts by mass or less, more preferably 5 parts by mass or less, and even more preferably 3 parts by mass or less, from the same viewpoint. Here, the amount of the acid anhydride such as maleic anhydride in this embodiment added can be measured by an acid value titration.

As the elastomer of the elastomer having a polar functional group, a thermoplastic elastomer which is known as a vibration-damping elastomer can be used. The thermoplastic elastomer has a glass transition temperature Tg of preferably -40°C or higher, and preferably 40°C or lower, from the viewpoint of improving the vibration-damping properties in a high-temperature region and in a low-temperature region. In addition, the peak value of tan δ obtained by the viscoelasticity measurement of the elastomer is preferably 0.5 or more, more preferably 0.8 or more, and even more preferably 1.0 or more. Further, a temperature range in which tan δ is 0.5 or more is preferably 10°C or higher, more preferably 20°C or higher, and it is preferable that a temperature range in which tan δ is 0.5 or more is from -40°C to 40°C, from the viewpoint of improving the vibration-damping properties in a high-temperature region and in a low-temperature region. The thermoplastic elastomer is, for example, preferably at least one member selected from styrenic thermoplastic elastomers, olefinic thermoplastic elastomers, polyester-based thermoplastic elastomers, polyamide-based thermoplastic elastomer, urethane-based thermoplastic elastomer, nitrile-based thermoplastic elastomer, fluorine-based thermoplastic elastomers, polybutadiene-based thermoplastic elastomers and silicone-based thermoplastic elastomers, and the styrenic thermoplastic elastomers are preferred, from the viewpoint of improving vibration-damping properties in a high-temperature region and in a low-temperature region. The high-temperature region as used herein means a temperature of from 35° to 80°C, and the low-temperature region as used herein means a temperature of from -30° to 10°C.

The styrenic thermoplastic elastomer (which may be hereinafter referred to as a styrenic elastomer in some cases) is composed of a block A in which a styrenic compound constituting a hard segment is polymerized and a block B in which a conjugated diene constituting a soft segment is polymerized. The styrenic compound used in the polymer block A includes, for example, styrenic compounds such as styrene, α-methylstyrene, o-methylstyrene, m-methylstyrene, p-methylstyrene, and 1,3-dimethylstyrene; polycyclic aromatic compounds having a vinyl group such as vinylnaphthalene and vinylanthracene, and the like. Among them, the polymer of the styrenic compound is preferred, and the polymer of styrene is more preferred. The conjugated diene used in the polymer block B includes, for example, butadiene, isoprene, butylene, isobutylene, ethylene, 1,3-pentadiene, 2,3-dimethyl-1,3-butadiene, and the like, preferably includes a block copolymer of one or more members selected from these conjugated diene monomers, and more preferably includes polyisoprene, polybutadiene, polyisobutylene, polyethylene, polybutylene, and copolymers of isoprene and butadiene. In addition, in the block B, the styrenic compound used in the above polymer block A may be copolymerized. In the case of each of the copolymers, as the forms thereof, any of the forms of random copolymers, block copolymers, and tapered copolymers can be selected. In addition, the styrenic compound may have a hydrogenated structure.

Specific examples of the styrenic elastomer described above include, for example, polystyrene-isoprene block copolymers (SIS), polystyrene-polybutadiene copolymers (SBS), polystyrene-hydrogenated polybutadiene copolymers (SEBS), polystyrene-hydrogenated polyisoprene-polystyrene block copolymers (SEPS), polystyrene-vinyl-polyisoprene-polystyrene block copolymers (SHIVS), polystyrene-isobutylene-polystyrene block copolymers (SIBS), polystyrene-ethylene-butylene-polyolefin (preferably polypropylene) block copolymers (SEBC), polystyrene-hydrogenated polybutadiene-hydrogenated polyisoprene-polystyrene block copolymers, polystyrene-hydrogenated polybutadiene-polyisoprene-polystyrene block copolymers, and the like. These styrenic elastomers may be used alone in a single kind or in combination of two or more kinds. In the present invention, in particular, SEBS, SHVIS, SBS, SIS, SIBS, or SEBC is preferred, and SEBS is more preferred.

The styrene content in the styrenic elastomer is preferably 10% by mass or more, and more preferably 15% by mass or more, and preferably 80% by mass or less, and more preferably 70% by mass or less, from the viewpoint of improving the vibration-damping properties in a high-temperature region and in a low-temperature region. The styrene content in the styrenic elastomer can be measured in accordance with a known method, for example, using NMR.

A known method can be applied in the preparation of the elastomer having a polar functional group. For example, the elastomer may be directly reacted with a compound having a polar functional group (for example, maleic anhydride or the like), or a polymer having a polar functional group may be introduced by copolymerization, or the elastomer can be prepared by mixing with components having a polar functional group, and it is preferable that the compound having a polar functional group is directly reacted. If necessary, a known polymerization initiator may be used. It is preferable that the ratio of the elastomer and the compound having a polar functional group is, for example, from 0.05 to 3 parts by mass, based on 100 parts by mass of the elastomer. In addition, those from which the residual monomers are removed are preferred, from the viewpoint of the vibration-damping properties and the impact resistance. The method for removing residual monomers is washing with an organic solvent, vent aspiration, gasification or the like, and preferred is washing with an organic solvent.

### [Fillers]

The filler is not particularly limited so long as the filler has a polar functional group out of the known fillers, and among the polar functional groups, a reactive functional group that binds to an elastomer having a polar functional group is preferred. In addition, among the fillers having a reactive functional group, the fillers include plate-like fillers, granular fillers, acicular fillers, fibrous fillers, and the like, and preferred are the plate-like fillers. The filler of the present invention can be used alone or in two or more kinds.

The phrase that binds to the elastomer means some sorts of chemical bonding, including hydrogen bonding, ionic bonding, covalent bonding, and the like. The stronger the bonding, the more favorable.

The reactive functional group includes a hydroxyl group, a carboxy group, an amino group, and the like, preferably a hydroxyl group, and more preferably a silanol group.

The filler having a reactive functional group as mentioned above includes, mica, talc, glass fillers, cellulose fillers, aluminum hydroxide, magnesium hydroxide, silica, and the like, preferably mica, talc, or glass fillers, and more preferably mica.

Further, an alkaline earth carbonate (for example, magnesium carbonate, calcium carbonate, and the like) can be preferably used as a filler. Specifically, the preferred filler in the present invention is exemplified by one or more fillers selected from the group consisting of mica, talc, glass fillers, calcium carbonate, cellulose fillers, aluminum hydroxide, magnesium hydroxide, and silica.

The filler is subjected to a treatment of reducing particle sizes to increase the interfacial adhesion surface, from the viewpoint of even more strengthening the interactions between the elastomer and the filler.

In the polypropylene resin composition of the present invention, the content of the filler, based on 100 parts by mass of the polypropylene resin, is preferably 5 parts by mass or more, more preferably 10 parts by mass or more, and even more preferably 15 parts by mass or more, from the viewpoint of improving flexural modulus, and the content is preferably 70 parts by mass or less, more preferably 65 parts by mass or less, and even more preferably 60 parts by mass or less, from the viewpoint of inhibiting the decrease in vibration-damping properties. Here, in a case where two or more kinds of the fillers are contained, the content is a total content thereof.

### [Maleic Anhydride-Modified Polyolefins]

The polypropylene resin composition of the present invention may further contain a maleic anhydride-modified polyolefin. The molded article of the polypropylene resin composition blended with the above components is more preferred because the molded article has improved strength and/or vibration-damping properties. The maleic anhydride-modified polyolefin is preferably a maleic anhydride-modified polypropylene, and in the present invention a commercially available product "Umex" manufactured by Sanyo Chemical Industries, Ltd. can be used.

In the polypropylene resin composition of the present invention, the content of the maleic anhydride-modified polyolefin, based on 100 parts by mass of the polypropylene resin, is preferably 0.1 parts by mass or more, more preferably 0.3 parts by mass or more, and even more preferably 0.5 parts by mass or more, from the viewpoint of the strength and/or the vibration-damping properties, and the content is preferably 2.0 parts by mass or less, more preferably 1.5 parts by mass or less, and even more preferably 0.7 parts by mass or less, from the viewpoint of the costs versus effects.

### [Optional Components]

The polypropylene resin composition of the present invention can contain, as other components besides those mentioned above, a chain extender, a plasticizer, an organic crystal nucleating agent, an inorganic crystal nucleating agent, a hydrolysis inhibitor, a flame retardant, an antioxidant, a lubricant such as a hydrocarbon wax or an anionic surfactant, an ultraviolet absorbent, an antistatic agent, an anti-clouding agent, a photo stabilizer, a pigment, a mildewproof agent, a bactericidal agent, a blowing agent or the like within the range that would not impair the effects of the present invention. In addition, similarly, other polymeric materials or other resin compositions can be contained within the range that would not impair the effects of the present invention.

### [Exemplifications of Methods for Producing Polypropylene Resin Composition]

Specific examples of the method for producing a polypropylene resin composition of the present invention include a method for production including melt-kneading a polypropylene resin with additives containing a melt-kneaded product of an elastomer having a polar functional group and a filler. A more preferred embodiment of the method for production includes a method for production including the step (1) of melt-kneading a mixture containing an elastomer having a polar functional group and a filler, and the step (2) of melt-kneading a kneaded product obtained in the above step (1) and a polypropylene resin, and an even more preferred embodiment includes a method for production including the step (1) of melt-kneading a mixture consisting of an elastomer having a polar functional group and a filler, and the step (2) of melt-kneading a kneaded product obtained in the above step (1) and a polypropylene resin. In the melt-kneading, a known kneader such as a closed kneader, a single-screw or twin-screw extruder, or an open roller-type kneader can be used. After the melt-kneading, a melt-kneaded product may be dried or cooled in accordance with a known method. In addition, it is possible to subject the raw materials to melt-kneading after homogenously mixing the raw materials with a Henschel mixer, super mixer, or the like in advance.

A preferred ratio of the elastomer having a polar functional group and the filler and the preferred ratio of the additives containing the melt-kneaded product or the kneaded product obtained in the step (1) and the polypropylene resin can be calculated on the bases of the numerical ranges described in the polypropylene resin of the present invention mentioned above or the like.

A still another specific example of a method for producing a polypropylene resin composition of the present invention includes a method for production including melt-kneading an elastomer having a polar functional group, a filler, and a polypropylene resin (hereinafter simply referred to as "one batch process"). In the melt-kneading, a known kneader mentioned above can be used, and preferred ratios of each component can be calculated on the basis of the numerical ranges described in the polypropylene resin of the present invention or the like.

One of the preferred embodiments for carrying out the above one batch process includes an embodiment of dividing each of the components mentioned above constituting the polypropylene resin composition into two groups, and melt-kneading the components in both the groups. More specifically, the embodiments include an embodiment including a preliminary kneaded product A containing a polypropylene resin and a filler is melt-kneaded with a preliminary kneaded product B containing a polypropylene resin, an elastomer having a polar functional group and a filler. By carrying out one-batch process in the embodiment as described above, some effects are exhibited such that the flexural strength and the heat resistance of the molded article made of the resin composition obtained are further improved, or that the vibration-damping properties are increased while maintaining the flexural strength and the heat resistance. Although the mechanisms for exhibiting the above effects are not ascertained, the interactions between the components in each of the preliminary kneaded products are promoted, whereby consequently leading to the improvement in the properties of the molded article.

### < Polypropylene Resin >

In this embodiment, the polypropylene resin is used by dividing into a preliminary kneaded product A and a preliminary kneaded product B. The kinds of the polypropylene resin in the preliminary kneaded product A may be identical to or different from the kinds in the preliminary kneaded product B. A total content of the polypropylene resin in the preliminary kneaded product A and the preliminary kneaded product B of the polypropylene resin composition obtained (in the same manner as in the content of the polypropylene resin in the polypropylene resin composition of the present invention mentioned above) is preferably 35% by mass or more, more preferably 45% by mass or more, and even more preferably 55% by mass or more, and on the other hand, a total content is preferably 85% by mass or less, more preferably 75% by mass or less, and even more preferably 65% by mass or less. The ratio of the polypropylene resin in the preliminary kneaded product A to the polypropylene resin in the preliminary kneaded product B (preliminary kneaded product A : preliminary kneaded product B) is not particularly limited, and the ratio, in terms of a mass ratio, is preferably from 20:80 to 80:20, more preferably from 30:70 to 70:30, and even more preferably from 40:60 to 60:40, from the viewpoint of miscibility.

### < Fillers >

In this embodiment, the filler is used by dividing into a preliminary kneaded product A and a preliminary kneaded product B. The kinds of the filler in the preliminary kneaded product A may be identical to or different from the kinds in the preliminary kneaded product B. A total content of the fillers in the preliminary kneaded product A and the preliminary kneaded product B, based on 100 parts by mass of the polypropylene resin (in the same manner as the content of the filler in the polypropylene resin composition of the present invention mentioned above), is preferably 5 parts by mass or more, more preferably 10 parts by mass or more, and even more preferably 15 parts by mass or more, and on the other hand, a total content is preferably 70 parts by mass or less, more preferably 65 parts by mass or less, and even more preferably 60 parts by mass or less. The ratio of the filler in the preliminary kneaded product A to the filler in the preliminary kneaded product B (preliminary kneaded product A : preliminary kneaded product B) is not particularly limited, and the ratio, in terms of a mass ratio, is preferably from 10:90 to 50:50, more preferably from 20:80 to 45:55, and even more preferably from 7:25 to 11:20, from the viewpoint of dispersibility and promotion of interactions.

### < Elastomer Having Polar Functional Group >

In this embodiment, the elastomer having a polar functional group is blended in a preliminary kneaded product B. A total content of the elastomer in the preliminary kneaded product A and the preliminary kneaded product B, based on 100 parts by mass of the polypropylene resin, is preferably 5 parts by mass or more, more preferably 10 parts by mass or more, and even more preferably 15 parts by mass or more, and on the other hand, a total content is preferably 70 parts by mass or less, more preferably 65 parts by mass or less, and even more preferably 60 parts by mass or less.

### < Preliminary Kneaded Product A >

A preliminary kneaded product A contains a polypropylene resin and a filler.

The content of the polypropylene resin in the preliminary kneaded product A is preferably 60% by mass or more, more preferably 70% by mass or more, and even more preferably 80% by mass or more, from the viewpoint of dispersibility and miscibility, and on the other hand, the content is preferably 93% by mass or less, more preferably 90% by mass or less, and even more preferably 88% by mass or less.

The filler which can be blended in the preliminary kneaded product A is as mentioned above, which is preferably one or more fillers selected from the group consisting of mica, talc, glass fillers, calcium carbonate, cellulose fillers, aluminum hydroxide, magnesium hydroxide, and silica. The filler is more preferably those including glass fillers, from the viewpoint of improving the flexural strength and the heat resistance. The content of the filler in the preliminary kneaded product A is preferably 5% by mass or more, more preferably 10% by mass or more, and even more preferably 12% by mass or more, from the viewpoint of exhibiting the desired effects, and on the other hand, the content is preferably 35% by mass or less, more preferably 30% by mass or less, and even more preferably 20% by mass or less.

It is preferable that the preliminary kneaded product A further contains a maleic anhydride-modified polyolefin, from the viewpoint of improving the strength and/or the vibration-damping properties of the molded article made of the polypropylene resin composition. The content of the maleic anhydride-modified polyolefin in the preliminary kneaded product A is preferably 0.2% by mass or more, more preferably 0.5% by mass or more, and even more preferably 0.9% by mass or more, from the viewpoint of exhibiting the desired effects, and on the other hand, the content is preferably 2.0% by mass or less, more preferably 1.5% by mass or less, and even more preferably 1.1% by mass or less.

The preliminary kneaded product A may contain optional components other than each of the components mentioned above, so long as the physical properties of the molded article are not decreased.

The preliminary kneaded product A can be prepared by melt-kneading each of the components with a kneader mentioned above.

### < Preliminary Kneaded Product B >

A preliminary kneaded product B contains a polypropylene resin, an elastomer having a polar functional group and a filler.

The content of the polypropylene resin in the preliminary kneaded product B is preferably 30% by mass or more, more preferably 35% by mass or more, and even more preferably 38% by mass or more, from the viewpoint of dispersibility and miscibility, and on the other hand, the content is preferably 55% by mass or less, more preferably 50% by mass or less, and even more preferably 46% by mass or less.

The elastomer having a polar functional group which can be blended in the preliminary kneaded product B is as mentioned above, and one or more members selected from the group consisting of maleic anhydride-modified polystyrene-hydrogenated polybutadiene copolymers (SEBS), maleic anhydride-modified polystyrene-isobutylene-polystyrene block copolymers (SIBS), maleic anhydride-modified polystyrene-ethylene-butylene-polyolefin block copolymers (SEBC), and epoxy-modified polystyrene-hydrogenated polybutadiene copolymers (SEBS) are preferred, from the viewpoint of improving the vibration-damping properties. The content of the elastomer having a polar functional group in the preliminary kneaded product B is preferably 25% by mass or more, more preferably 30% by mass or more, and even more preferably 35% by mass or more, from the viewpoint of exhibiting the desired effects, and on the other hand, the content is preferably 50% by mass or less, more preferably 45% by mass or less, and even more preferably 41% by mass or less.

The filler which can be blended in the preliminary kneaded product B is as mentioned above, and one or more fillers selected from the group consisting of mica, talc, glass fillers, calcium carbonate, cellulose fillers, aluminum hydroxide, magnesium hydroxide, and silica are preferred, and those including calcium carbonate are more preferred, from the viewpoint of improving the vibration-damping properties. The content of the filler in the preliminary kneaded product B is preferably 10% by mass or more, more preferably 15% by mass or more, and even more preferably 18% by mass or more, from the viewpoint of exhibiting the desired effects, and on the other hand, the content is preferably 35% by mass or less, more preferably 30% by mass or less, and even more preferably 20% by mass or less.

The preliminary kneaded product B may contain optional components other than each of the components mentioned above, so long as the physical properties of the molded article are not decreased.

The preliminary kneaded product B can be prepared by melt-kneading each of the components with a kneader mentioned above.

### < Method for Producing Polypropylene Resin Composition in Accordance with This Embodiment >

A polypropylene resin composition can be produced by melt-kneading a preliminary kneaded product A and a preliminary kneaded product B mentioned above in one batch with a kneader mentioned above or a known injection-molding machine.

### [Additives]

The additives of the present invention include a melt-kneaded product of the elastomer having a polar functional group and the filler, and besides the melt-kneaded product, a chain extender, a plasticizer, an organic crystal nucleating agent, an inorganic crystal nucleating agent, a hydrolysis inhibitor, a flame retardant, an antioxidant, a lubricant such as a hydrocarbon wax or an anionic surfactant, an ultraviolet absorbent, an antistatic agent, an anti-clouding agent, a photo stabilizer, a pigment, a mildewproof agent, a bactericidal agent, a blowing agent or the like can be optionally contained within the range that would not impair the effects of the present invention. Further, in the additives of the present invention, a part of the resin to be melt-kneaded together (for example, from 0.1 to 50.0% by mass of the additives) may be contained. The additives of the present invention can be used as additives for various resins.

The resin to which the additives of the present invention are added includes, for example, besides the polypropylene resin mentioned above, polyethylene resins, polystyrene resins, polyvinyl chloride resin, ABS resins, acrylic resins, polyamide resins, polyester resins, and the like. The additives, as mentioned above, can improve the vibration-damping properties and the impact resistance of the resin composition obtained by melt-kneading with the resin.

The content of the elastomer having a polar functional group in the additives is preferably 10.0% by mass or more, more preferably 15.0% by mass or more, and even more preferably 20.0% by mass or more, from the viewpoint of the vibration-damping properties and the impact resistance, and the content is preferably 55.0% by mass or less, more preferably 50.0% by mass or less, and even more preferably 45.0% by mass or less, from the same viewpoint. The content of the filler in the additives is preferably 20.0% by mass or more, more preferably 30.0% by mass or more, and even more preferably 40.0% by mass or more, from the viewpoint of the vibration-damping properties and the impact resistance, and the content is preferably 90.0% by mass or less, more preferably 85.0% by mass or less, and even more preferably 80.0% by mass or less, from the same viewpoint. One of the preferred embodiments of the additives of the present invention consist of an elastomer having a polar functional group and a filler.

An unreacted product added with a polar functional group may remain in the elastomer having a polar functional group. It is preferable to remove the unreacted product, from the viewpoint of improving the effects of the present invention, and the method for removal is preferably washing with a solvent or distillation, among which the washing with a solvent is preferred, and washing with acetone is more preferred.

The melt-kneading temperature and the melt-kneading time during the preparation of the additives, the polypropylene resin composition, the preliminary kneaded product A or the preliminary kneaded product B, which are mentioned above are not unconditionally set and they depend upon the kinds of raw materials used, and the melt-kneading temperature and the melt-kneading time are preferably from 170° to 240°C and from 15 to 900 seconds.

The polypropylene resin composition of the present invention can be suitably used as a vibration-damping material used in manufactured articles such as audio equipment, electric appliances, construction buildings, and industrial equipment, or parts or housing thereof, by using various mold-processing methods such as injection molding, extrusion molding or thermoforming.

For example, when the parts or housing containing the polypropylene resin composition of the present invention is produced by injection molding, the parts or housing is obtained by filling pellets of the above polypropylene resin composition in an injection-molding machine, and injecting molten pellets into a mold to mold.

In the injection molding, a known injection-molding machine can be used, including, for example, a machine comprising a cylinder and a screw inserted through an internal thereof as main constituting elements [J75E-D, J110AD-180H manufactured by The Japan Steel Works, Ltd. or the like]. Here, although the raw materials for the above-mentioned polypropylene resin composition may be supplied to a cylinder and directly melt-kneaded, it is preferable that a product previously melt-kneaded is filled in an injection-molding machine.

In addition, when a molding method other than the injection molding is used, molding may be carried out in accordance with a known method without particular limitations.

### [Molded Article or Vibration-Damping Material]

The molded article of the polypropylene resin composition of the present invention or a polypropylene resin composition produced by the method for production of the present invention can be suitably used as a vibration-damping material or the like used in manufactured articles such as audio equipment, electric appliances, construction buildings, and industrial equipment, or parts or housing thereof. In addition, since the molded article of the polypropylene resin composition of the present invention has a high flexural modulus even as a single material, the molded article has excellent vibration-damping properties capable of sufficiently keeping the shape with a single material without having to use a high-rigidity material such as a metal steel plate, and can be preferably used in manufactured articles that are required to be light-weighted of automobiles, railcars, airplanes, or the like, or parts or housing thereof.

The applications of the polypropylene resin composition of the present invention or a polypropylene resin composition produced by the method for production of the present invention to a vibration-damping material are exemplified as follows. The polypropylene resin composition can be used for speakers, television, radio cassette recorders, headphones, audio components, microphones, audio players, compact disc players, floppy(registered trademark), video players, etc. as materials for audio equipment housings; further electromotive tools such as electromotive drills and electromotive drivers, electric appliances with cooling functions such as computers, projectors, servers, and POS systems, washing machines, clothes dryers, air-conditioned indoor units, sewing machines, dishwashers, multifunctional photocopier machines, printers, scanners, hard disk drives, video cameras, humidifiers, air cleaners, cellular phones, dryers, etc. as materials for parts and housings of electric appliances with electromotive motors; electromotive toothbrushes, electromotive shavers, massaging machines, etc. as materials for parts and housings of vibrated source-containing electric appliances; generators, gas generators, etc. as materials for parts and housings of electric appliances with motors; refrigerators, automatic vending machines, air-conditioned external machines, dehumidifiers, domestic generators as materials for parts and housings of electric appliances with compressors; materials for interior materials such as dashboards, instrumental panels, floor, doors, and roofs, engine-related materials such as oil pans, front cover, and locker cover, car navigation, door trim, gear box, dash silencer, module carrier, etc. as materials for automobile parts; soundproof plates, road lighting luminaires, ETC (Electronic Toll Collection) facility members, etc. as materials for roads; interior materials such as floor, walls, side plates, ceiling, doors, chairs, and tables, housings or parts of motor-related area, gear case, pantagraph covers, various protective covers, etc. as materials for railcar parts; interior materials such as floor, walls, side plates, ceiling, chairs, and tables, housings or parts in the engine-related parts etc. as materials for airplane parts; housings or wall materials for engine room, housings or wall materials for instrumental measurement room, as materials for ship parts; walls, ceiling, floor, partition boards, soundproof walls, shutters, curtain rails, pipe ducts, staircases, doors, window frames, etc. as materials for construction; shooters, elevators (lifts), winches or hoists, escalators, conveyors, tractors, bulldozers, lawn mowers, etc. as materials for industrial equipment parts; respiratory organ-associated equipment, ear, nose and throat (ENT)-associated equipment, dental equipment, surgical equipment, etc. as materials for parts and housing of medical equipment, and the like.

The applications of the polypropylene resin composition of the present invention to manufactured articles such as audio equipment, electric appliances, transportation vehicles, construction buildings, and industrial equipment, or parts or housing thereof can be appropriately set according to the methods for producing parts, housings, apparatuses, and equipment, applied portions, and intended purposes, and the polypropylene resin composition can be used in accordance with a conventional method in the art.

The polypropylene resin composition of the present invention or a polypropylene resin composition produced by the method for production of the present invention can be applied to fans and structural members of the fans. The polypropylene resin composition can be applied to manufactured articles having various kinds of fans, including, for example, electric appliances with compressors such as microwave ovens and refrigerators; cooling fan devices set to housing cases for electronic equipment such as electronic cameras, image recorder-player devices, computers, and projectors; cooling fan devices for dissipating heat such as radiators and condensers for air-conditioning devices for automobiles or cooling fan or ventilation fan devices such as ventilators, electric fans, and air conditioners (fan heaters); motor covers for electric appliances; audio equipment such as speakers, television, radio cassette recorders, headphones, and audio components; and construction materials such as soundproof walls, pipes, pipe ducts, and the like.

The kinds of the fan include centrifugal fan such as sirocco fan or turbo fan, side flow fan such as cross flow fan, axial flow fan such as mixed-flow turbin and propeller fan, one rotated and driven by electric generators driven by direct current or alternating current, and the like.

The sizes of the fan are diversified depending upon the kinds and the applications, and the size includes, for example, an outer shape diameter Φ of from 10 mm to 10,000 mm. The sizes of the blades are such that the length is from 10 mm to 10,000 mm, and the width is from 10 mm to 10,000 mm.

The frequency at which the vibration-damping effects and the noise reduction effects are markedly exhibited includes frequency of peaks of rotation noises derived from F = NZk/60, frequency derived from rotations or vibrations of the motor, resonance frequency of the fan, resonance frequency of the structural members, and the like. When the above frequency exists in a low frequency side, low-frequency noises are generated, so that it is anticipated that low-frequency noises can be reduced as the effects when using the vibration-damping material. It is anticipated that the frequency exists in a high frequency side, so that high-frequency noises are generated, whereby high-frequency noises can be reduced as the effects when using the vibration-damping material.

Further, the noises are markedly increased when each of the frequency of peaks of rotation noises derived from F = NZk/60 or the frequency derived from rotations or vibrations of the motor mentioned above overlaps with the resonance frequency of the fan or the resonance frequency of the structural members, and moreover, noise reduction is exhibited when the fan formed from the polypropylene resin composition of the present invention is used.

In order to realize reduction of fan noises, at least one of suppression of vibrations of blades themselves of the fan, suppression of vibrations of structural members in the periphery of the fan, including, for example, a fan cover, a fan casing, a motor cover, a duct, a baffle plate, bell mouse, hood, or the like, suppression of vibrations derived from motors rotating the fan, suppression of vibrations derived from housing of motors and the like may be accomplished.

The applications of the fan formed from the polypropylene resin composition of the present invention to manufactured articles such as audio equipment, electric appliances, transportation vehicles, construction buildings, and industrial equipment, or parts or housing thereof can be appropriately set according to the methods for producing the parts, housings, apparatuses and equipment, applied portions, and intended purposes, and the fan can be used in accordance with a conventional method in the art.

With respect to the above-mentioned embodiments, the present invention further discloses the following polypropylene resin compositions, the methods for producing a polypropylene resin composition, the additives, and the vibration-damping materials.
<1> A polypropylene resin composition containing a polypropylene resin, an elastomer having a polar functional group, and a filler.
<2> The polypropylene resin composition according to the above <1>, further containing preferably a maleic anhydride-modified polyolefin, and more preferably a maleic anhydride-modified polypropylene.
<3> The polypropylene resin composition according to the above <1> or <2>, wherein the polar functional group of the elastomer having a polar functional group is preferably one or more members selected from the group consisting of an ester group, an amide group, a hydroxyl group, a carboxy group, an amino group, an acid anhydride group, an epoxy group and a carbodiimide group.
<4> The polypropylene resin composition according to any one of the above <1> to <3>, wherein the elastomer of the elastomer having a polar functional group is preferably at least one thermoplastic elastomer selected from styrenic thermoplastic elastomers, olefinic thermoplastic elastomers, polyester-based thermoplastic elastomers, polyamide-based thermoplastic elastomer, urethane-based thermoplastic elastomer, nitrile-based thermoplastic elastomer, fluorine-based thermoplastic elastomers, polybutadiene-based thermoplastic elastomers and silicone-based thermoplastic elastomers, more preferably the styrenic thermoplastic elastomers, and even more preferably at least one member selected from polystyrene-isoprene block copolymers (SIS), polystyrene-polybutadiene copolymers (SBS), polystyrene-hydrogenated polybutadiene copolymers (SEBS), polystyrene-hydrogenated polyisoprene-polystyrene block copolymers (SEPS), polystyrene-vinyl-polyisoprene-polystyrene block copolymers (SHIVS), polystyrene-isobutylene-polystyrene block copolymers (SIBS), polystyrene-ethylene-butylene-polyolefin (preferably polypropylene) block copolymers (SEBC), polystyrene-hydrogenated polybutadiene-hydrogenated polyisoprene-polystyrene block copolymers, and polystyrene-hydrogenated polybutadiene-polyisoprene-polystyrene block copolymers.
<5> The polypropylene resin composition according to any one of the above <1> to <4>, wherein the elastomer having a polar functional group is preferably one or more members selected from the group consisting of maleic anhydride-modified SEBS, maleic anhydride-modified SIBS, maleic anhydride-modified SEBC, and epoxy-modified SEBS.
<6> The polypropylene resin composition according to any one of the above <1> to <5>, wherein the filler is preferably one or more fillers selected from the group consisting of mica, talc, glass fillers, calcium carbonate, cellulose fillers, aluminum hydroxide, magnesium hydroxide, and silica.
<7> The polypropylene resin composition according to any one of the above <1> to <6>, wherein the amount of the polypropylene resin in the polypropylene resin composition is preferably 35% by mass or more, more preferably 45% by mass or more, and even more preferably 55% by mass or more, and on the other hand, the amount is preferably 85% by mass or less, more preferably 75% by mass or less, and even more preferably 65% by mass or less; and wherein the content of the elastomer having a polar functional group based on 100 parts by mass of the polypropylene resin in the polypropylene resin composition is preferably 5 parts by mass or more, more preferably 10 parts by mass or more, and even more preferably 15 parts by mass or more, and on the other hand, the content is preferably 60 parts by mass or less, more preferably 50 parts by mass or less, even more preferably 40 parts by mass or less, even more preferably 35 parts by mass or less, and even more preferably 30 parts by mass or less; and wherein the content of the filler based on 100 parts by mass of the polypropylene resin in the polypropylene resin composition is preferably 5 parts by mass or more, more preferably 10 parts by mass or more, and even more preferably 15 parts by mass or more, and on the other hand, the content is preferably 70 parts by mass or less, more preferably 65 parts by mass or less, and even more preferably 60 parts by mass or less.
<8> The polypropylene resin composition according to any one of the above <1> to <7>, wherein the amount of the polypropylene resin in the polypropylene resin composition is preferably 35% by mass or more, more preferably 45% by mass or more, and even more preferably 55% by mass or more, and on the other hand, the amount is preferably 85% by mass or less, more preferably 75% by mass or less, and even more preferably 65% by mass or less; and wherein the content of the elastomer having a polar functional group based on 100 parts by mass of the polypropylene resin in the polypropylene resin composition is preferably 5 parts by mass or more, more preferably 10 parts by mass or more, and even more preferably 15 parts by mass or more, and on the other hand, the content is preferably 60 parts by mass or less, more preferably 50 parts by mass or less, even more preferably 40 parts by mass or less, even more preferably 35 parts by mass or less, and even more preferably 30 parts by mass or less; and wherein the content of the filler based on 100 parts by mass of the polypropylene resin in the polypropylene resin composition is preferably 5 parts by mass or more, more preferably 10 parts by mass or more, and even more preferably 15 parts by mass or more, and on the other hand, the content is preferably 70 parts by mass or less, more preferably 65 parts by mass or less, and even more preferably 60 parts by mass or less; and wherein the content of the maleic anhydride-modified polyolefin in the polypropylene resin composition, based on 100 parts by mass of the polypropylene resin, is preferably 0.1 parts by mass or more, more preferably 0.3 parts by mass or more, and even more preferably 0.5 parts by mass or more, and on the other hand, the content is preferably 2.0 parts by mass or less, more preferably 1.5 parts by mass or less, and even more preferably 0.7 parts by mass or less.
<9> A method for producing a polypropylene resin composition, including melt-kneading a polypropylene resin with additives containing a melt-kneaded product of an elastomer having a polar functional group and a filler.
<10> The method for producing a polypropylene resin composition according to the above <9>, including the step (1) of melt-kneading a mixture consisting of an elastomer having a polar functional group and a filler, and the step (2) of melt-kneading a kneaded product obtained in the above step (1) and a polypropylene resin.
<11> A method for producing a polypropylene resin composition including melt-kneading an elastomer having a polar functional group, a filler, and a polypropylene resin.
<12> The method for producing a polypropylene resin composition according to the above <11>, wherein a preliminary kneaded product A containing a polypropylene resin and a filler is melt-kneaded with a preliminary kneaded product B containing a polypropylene resin, an elastomer having a polar functional group and a filler, whereby the melt-kneading of the elastomer having a polar functional group, the filler, and the polypropylene resin is carried out.
<13> The method for producing a polypropylene resin composition according to the above <12>, wherein the preliminary kneaded product A further contains preferably a maleic anhydride-modified polyolefin, and more preferably a maleic anhydride-modified polypropylene.
<14> The method for producing a polypropylene resin composition according to any one of the above <9> to <13>, wherein the elastomer having a polar functional group is preferably one or more elastomers selected from the group consisting of maleic anhydride-modified SEBS, maleic anhydride-modified SIBS, maleic anhydride-modified SEBC, and epoxy-modified SEBS.
<15> The method for producing a polypropylene resin composition according to any one of the above <9> to <14>, wherein the filler is preferably one or more fillers selected from the group consisting of mica, talc, glass fillers, calcium carbonate, cellulose fillers, aluminum hydroxide, magnesium hydroxide, and silica.
<16> The method for producing a polypropylene resin composition according to any one of the above <12> to <15>, wherein the ratio of the polypropylene resin in the preliminary kneaded product A to the polypropylene resin in the preliminary kneaded product B (preliminary kneaded product A : preliminary kneaded product B), in terms of a mass ratio, of preferably from 20:80 to 80:20, more preferably from 30:70 to 70:30, and even more preferably from 40:60 to 60:40; and wherein the ratio of the filler in the preliminary kneaded product A to the filler in the preliminary kneaded product B (preliminary kneaded product A : preliminary kneaded product B), in terms of a mass ratio, is preferably from 10:90 to 50:50, more preferably from 20:80 to 30:70, and even more preferably from 7:25 to 11:20.
<17> The method for producing a polypropylene resin composition according to any one of the above <12> to <16>, wherein a total content of the polypropylene resin in the preliminary kneaded product A and the preliminary kneaded product B is preferably 35% by mass or more, more preferably 45% by mass or more, and even more preferably 55% by mass or more, and on the other hand, a total content is preferably 85% by mass or less, more preferably 75% by mass or less, and even more preferably 65% by mass or less; and wherein a total content of the elastomer having a polar functional group in the preliminary kneaded product A and the preliminary kneaded product B, based on 100 parts by mass of the polypropylene resin, is preferably 5 parts by mass or more, more preferably 10 parts by mass or more, and even more preferably 15 parts by mass or more, and on the other hand, a total content is preferably 70 parts by mass or less, more preferably 65 parts by mass or less, and even more preferably 60 parts by mass or less; and wherein a total content of the filler in the preliminary kneaded product A and the preliminary kneaded product B, based on 100 parts by mass of the polypropylene resin, is preferably 5 parts by mass or more, more preferably 10 parts by mass or more, and even more preferably 15 parts by mass or more, and on the other hand, a total content is preferably 70 parts by mass or less, more preferably 65 parts by mass or less, and even more preferably 60 parts by mass or less; and wherein a total content of the maleic anhydride-modified polyolefin in the preliminary kneaded product A and the preliminary kneaded product B, based on 100 parts by mass of the polypropylene resin, is preferably 0.1 parts by mass or more, more preferably 0.3 parts by mass or more, and even more preferably 0.5 parts by mass or more, and on the other hand, a total content is preferably 2.0 parts by mass or less, more preferably 1.5 parts by mass or less, and even more preferably 0.7 parts by mass or less, based on 100 parts by mass of the polypropylene resin.
<18> The method for producing a polypropylene resin composition according to any one of the above <12> to <17>, wherein it is preferable that the filler which can be blended in the preliminary kneaded product A is preferably one or more members selected from the group consisting of mica, talc, glass fillers, calcium carbonate, cellulose fillers, aluminum hydroxide, magnesium hydroxide, and silica, and more preferably those including glass fillers.
<19> The method for producing a polypropylene resin composition according to any one of the above <12> to <18>, wherein the content of the polypropylene resin in the preliminary kneaded product A is preferably 60% by mass or more, more preferably 70% by mass or more, and even more preferably 80% by mass or more, and on the other hand, the content is preferably 93% by mass or less, more preferably 90% by mass or less, and even more preferably 88% by mass or less; and wherein the content of the filler in the preliminary kneaded product A is preferably 5% by mass or more, more preferably 10% by mass or more, and even more preferably 12% by mass or more, and on the other hand, the content is preferably 35% by mass or less, more preferably 30% by mass or less, and even more preferably 20% by mass or less; and wherein the content of the maleic anhydride-modified polyolefin in the preliminary kneaded product A is preferably 0.2% by mass or more, more preferably 0.5% by mass or more, and even more preferably 0.9% by mass or more, and on the other hand, the content is preferably 2.0% by mass or less, more preferably 1.5% by mass or less, and even more preferably 1.1% by mass or less.
<20> The method for producing a polypropylene resin composition according to any one of the above <12> to <19>, wherein the elastomer having a polar functional group which can be blended in the preliminary kneaded product B is preferably one or more members selected from the group consisting of maleic anhydride-modified SEBS, maleic anhydride-modified SIBS, maleic anhydride-modified SEBC, and epoxy-modified SEBS; and wherein the filler which can be blended in the preliminary kneaded product B is preferably one or more fillers selected from the group consisting of mica, talc, glass fillers, calcium carbonate, cellulose fillers, aluminum hydroxide, magnesium hydroxide, and silica, and more preferably those including calcium carbonate.
<21> The method for producing a polypropylene resin composition according to any one of the above <12> to <20>, wherein the content of the polypropylene resin in the preliminary kneaded product B is preferably 30% by mass or more, more preferably 35% by mass or more, and even more preferably 38% by mass or more, and on the other hand, the content is preferably 55% by mass or less, more preferably 50% by mass or less, and even more preferably 46% by mass or less; and wherein the content of the elastomer having a polar functional group in the preliminary kneaded product B is preferably 25% by mass or more, more preferably 30% by mass or more, and even more preferably 35% by mass or more, and on the other hand, the content is preferably 50% by mass or less, more preferably 45% by mass or less, and even more preferably 41% by mass or less; and wherein the filler in the preliminary kneaded product B is preferably 10% by mass or more, more preferably 15% by mass or more, and even more preferably 18% by mass or more, and on the other hand, the content is preferably 35% by mass or less, more preferably 30% by mass or less, and even more preferably 20% by mass or less.
<22> The method for producing a polypropylene resin composition according to any one of the above <12> to <21>, wherein the preliminary kneaded product A and the preliminary kneaded product B are melt-kneaded in one batch process with a kneader, thereby producing a polypropylene resin composition.
<23> The method for producing a polypropylene resin composition according to any one of the above <9> to <22>, the melt-kneading temperature in the preparation of the polypropylene resin composition, the preliminary kneaded product A and/or the preliminary kneaded product B is preferably from 170° to 240°C, and the melt-kneading time is preferably from 15 to 900 seconds.
<24> The polypropylene resin composition according to any one of the above <1> to <8>, or a polypropylene resin composition produced by a method for producing a polypropylene resin composition as defined in any one of the above <9> to <23>, which is applicable preferably to fans and structural members of the fans; and more preferably applicable to manufactured articles having various fans such as electric appliances with compressors such as microwave ovens and refrigerators; cooling fan devices set to housing cases for electronic equipment such as electronic cameras, image recorder-player devices, computers, and projectors; cooling fan devices for dissipating heat such as radiators and condensers for air-conditioning devices for automobiles or cooling fan or ventilation fan devices such as ventilators, electric fans, and air conditioners (fan heaters); motor covers for electric appliances; audio equipment such as speakers, television, radio cassette recorders, headphones, and audio components; and construction materials for soundproof walls, pipes, pipe ducts.
<25> Additives containing a melt-kneaded product of an elastomer having a polar functional group and a filler.
<26> The additives according to the above <25>, wherein the elastomer having a polar functional group is preferably one or more elastomers selected from the group consisting of maleic anhydride-modified SEBS, maleic anhydride-modified SIBS, maleic anhydride-modified SEBC, and epoxy-modified SEBS.
<27> The additives according to the above <25> or <26>, wherein the filler is preferably one or more fillers selected from the group consisting of mica, talc, glass fillers, calcium carbonate, cellulose fillers, aluminum hydroxide, magnesium hydroxide, and silica.
<28> The additives according to any one of the above <25> to <27>, wherein the resin to which the additives are added is preferably the above polypropylene resin, a polyethylene resin, a polystyrene resin, a polyvinyl chloride resin, an ABS resin, an acrylic resin, a polyamide resin and/or a polyester resin.
<29> The additives according to any one of the above <25> to <28>, wherein the content of the elastomer having a polar functional group in the additives is preferably 10.0% by mass or more, more preferably 15.0% by mass or more, and even more preferably 20.0% by mass or more, and on the other hand, the content is preferably 55.0% by mass or less, more preferably 50.0% by mass or less, and even more preferably 45.0% by mass or less; and wherein the content of the filler in the additives is preferably 20.0% by mass or more, more preferably 30.0% by mass or more, and even more preferably 40.0% by mass or more, and on the other hand, the content is preferably 90.0% by mass or less, more preferably 85.0% by mass or less, and even more preferably 80.0% by mass or less.
<30> A vibration-damping material containing a polypropylene resin composition as defined in the above <1> to <8>, or a polypropylene resin composition produced by a method for producing a polypropylene resin composition as defined in any one of the above <9> to <23>.
<31> The vibration-damping material according to the above <30>, wherein the vibration-damping material is preferably a vibration-damping material used in manufactured articles such as audio equipment, electric appliances, construction buildings, and industrial equipment, or parts or housing thereof.

### EXAMPLES

The present invention will be described more specifically by means of the following Preparation Examples, Examples and the like. The examples and the like are not to be construed as limitations of the present invention.

### [Preparation of Elastomer Having Polar Functional Group] Preparation Example 1

One-hundred parts by mass of SEBS, 6.0 parts by mass of maleic anhydride, and 0.1 parts by mass of an organic peroxide dicumyl peroxide were reacted and kneaded at 260°C with an intermeshing co-rotating twin-screw extruder manufactured by The Japan Steel Works, Ltd., TEX-28V (L/D = 42, D = 28), and strand-cut, to provide pellets of a maleic anhydride-modified SEBS (simply referred to as "MAH-SEBS"). Here, the pellets obtained were subjected to dehumidification drying at 80°C for 3 hours, to adjust its water content to 1,000 ppm or less. Further, the pellets obtained were washed with acetone for 3 hours under reflux, to remove the residual monomers. The amount of maleic anhydride added in MAH-SEBS was measured by an acid value titration. The results are shown in Table 1. Here, the amount of maleic anhydride added is a value based on 100 parts by mass of SEBS.

### Preparation Example 2

The same procedures as in Preparation Example 1 were carried out except that SIBS was used in place of SEBS, to provide pellets of a maleic anhydride-modified SIBS (simply referred to as "MAH-SIBS"). The pellets obtained were subjected to each of the treatments of dehumidification drying and the removal of the residual monomers in the same manner as in Preparation Example 1. The amount of maleic anhydride added in MAH-SIBS was measured by an acid value titration. The results are shown in Table 4. Here, the amount of maleic anhydride added is a value based on 100 parts by mass of SIBS.

### Preparation Example 3

The same procedures as in Preparation Example 1 were carried out except that SEBC was used in place of SEBS, to provide pellets of a maleic anhydride-modified SEBC (simply referred to as "MAH-SEBC"). The pellets obtained were subjected to each of the treatments of dehumidification drying and the removal of the residual monomers in the same manner as in Preparation Example 1. The amount of maleic anhydride added in MAH-SEBC was measured by an acid value titration. The results are shown in Table 4. Here, the amount of maleic anhydride added is a value based on 100 parts by mass of SEBC.

### Preparation Example 4

One-hundred parts by mass of MAH-SEBS obtained in Preparation Example 1 and 5.0 parts by mass of a polycarbodiimide were reacted and kneaded at 250°C with an intermeshing co-rotating twin-screw extruder manufactured by The Japan Steel Works, Ltd., TEX-28V (L/D = 42, D = 28), and strand-cut, to provide pellets of a polycarbodiimide-modified SEBS (simply referred to as "CDI-SEBS"). Here, the pellets obtained were subjected to dehumidification drying at 80°C for 3 hours, to adjust its water content to 1,000 ppm or less. The amount of carbodiimide (CDI) added in CDI-SEBS was measured in accordance with a method described in WO 2009/069649. The results are shown in Table 5. Here, the amount of CDI added is a value based on 100 parts by mass of SEBS.

### < Amount of Polar Functional Group Added >

The amount of the polar functional group added in the elastomer having a polar functional group, prepared in the above preparation examples was measured as follows.

In reference to methods described in Japanese Patent Laid-Open No. Hei-11-080522 (carbodiimide) and Japanese Patent Laid-Open No. 2002-202301 (maleic anhydride), an elastomer having a polar functional group was dissolved in toluene, benzyl alcohol was then added to the solution, and an acid value titration was carried out using phenol red as a detection solution, and a KOH solution as a titrating solution. The amount of the polar functional group added was measured from the value of the acid value obtained.

### [Production of Polypropylene Resin Compositions]

### Examples 1 to 9

The pellets of the elastomer obtained in Preparation Example 1, 2, 3 or 4 and a filler as listed in each of Tables 1 to 5 were reacted and kneaded at 200°C with an intermeshing co-rotating twin-screw extruder manufactured by The Japan Steel Works, Ltd., TEX-28V (L/D = 42, D = 28), and strand-cut, to provide each of pellets of a mixture of the elastomer and the filler. Here, the pellets obtained were subjected to dehumidification drying at 80°C for 3 hours, to adjust its water content to 1,000 ppm or less. Next, the pellets of the mixture obtained and the polypropylene resin were melt-kneaded at 200°C with the above extruder, and strand-cut, to provide pellets of a polypropylene resin composition. Here, the pellets obtained were subjected to dehumidification drying at 80°C for 3 hours, to adjust its water content to 500 ppm or less.

### Comparative Examples 1 to 12

The same procedures as in Example 1 were carried out except that the raw materials as listed in Tables 1 to 5 were used, to provide each of pellets of a polypropylene resin composition. Here, maleic anhydride in Comparative Example 3 was added during melt-kneading of the pellets of the mixture and the polypropylene resin.

### Example 10

The pellets of the elastomer obtained in Preparation Example 1, and a filler as listed in Table 5, and a polypropylene resin were reacted and kneaded in a mass ratio as listed in Table 5 at 200°C with an intermeshing co-rotating twin-screw extruder manufactured by The Japan Steel Works, Ltd., TEX-28V (L/D = 42, D = 28), and strand-cut, to provide pellets of a polypropylene resin composition. The pellets obtained were subjected to dehumidification drying at 80°C for 3 hours, to adjust its water content to 500 ppm or less.

### Comparative Example 13

The same procedures as in Example 10 were carried out except that pellets of SEBS were used in place of the pellets of the elastomer obtained in Preparation Example 1, to provide pellets of a polypropylene resin composition. The pellets obtained were subjected to dehumidification drying at 80°C for 3 hours, to adjust its water content to 500 ppm or less.

### Example 11

The pellets of the elastomer obtained in Preparation Example 1, a filler, a maleic anhydride-modified PP, and a polypropylene resin were reacted and kneaded in a mass ratio as listed in Table 6 at 200°C with an intermeshing co-rotating twin-screw extruder manufactured by The Japan Steel Works, Ltd., TEX-28V (L/D = 42, D = 28), and strand-cut, to provide pellets of a polypropylene resin composition. The pellets obtained were subjected to dehumidification drying at 80°C for 3 hours, to adjust its water content to 500 ppm or less.

### Example 12

A filler, a maleic anhydride-modified PP, and a polypropylene resin were reacted and kneaded in a mass ratio as listed in Table 6 at 200°C with an intermeshing co-rotating twin-screw extruder manufactured by The Japan Steel Works, Ltd., TEX-28V (L/D = 42, D = 28), and strand-cut, to provide pellets of a preliminary kneaded product A. The pellets obtained were subjected to dehumidification drying at 80°C for 3 hours, to adjust its water content to 500 ppm or less.

Separately from the above, the pellets of the elastomer obtained in Preparation Example 1, a filler, and a polypropylene resin were reacted and kneaded in a mass ratio as listed in Table 6 at 200°C with an intermeshing co-rotating twin-screw extruder manufactured by The Japan Steel Works, Ltd., TEX-28V (L/D = 42, D = 28), and strand-cut, to provide pellets of a preliminary kneaded product B. The pellets obtained were subjected to dehumidification drying at 80°C for 3 hours, to adjust its water content to 500 ppm or less.

The preliminary kneaded product A and the preliminary kneaded product B were dry-blended in a ratio that the pellets of the preliminary kneaded product A were 61.7 parts by mass and the pellets of the preliminary kneaded product B were 110 parts by mass, the mixture was then supplied into an injection-molding machine J110AD-180H manufactured by The Japan Steel Works, Ltd. (cylinder temperatures set at 6 locations) and melt-kneaded by injection-molding. The conditions at this time were such that the cylinder temperatures were set at 200°C for the sections up to fifth units from the nozzle end side, at 170°C for the remaining one unit, and at 45°C for the section below the hopper. The molded product obtained was strand-cut, to provide pellets of a polypropylene resin composition.

### Example 13

The same procedures as in Example 12 were carried out except that the amounts of each component were changed in a mass ratio as listed in Table 6, to provide the pellets of a preliminary kneaded product A and the pellets of a preliminary kneaded product B. Next, the preliminary kneaded product A and the preliminary kneaded product B were dry-blended in a ratio that the pellets of the preliminary kneaded product A were 57.5 parts by mass, and the pellets of the preliminary kneaded product B were 127 parts by mass, to provide the pellets of a polypropylene resin composition in the same manner as in Example 12.

### [Evaluations of Polypropylene Resin Compositions]

The pellets obtained in each of Examples and Comparative Examples were injection-molded with an injection-molding machine J110AD-180H manufactured by The Japan Steel Works, Ltd. (cylinder temperatures set at 6 locations), of which cylinder temperature was set at 200°C for the sections up to fifth units from the nozzle end side, at 170°C for the remaining one unit, and at 45°C for the section below the hopper, to mold into rectangular test pieces (62 mm × 12.7 mm × 5 mm), rectangular test pieces (125 mm × 13 mm × 6.4 mm), and rectangular test pieces (127 mm × 12.7 mm × 1.6 mm) at a mold temperature set to 80°C, to provide a molded article of the resin composition. The molded article obtained was subjected to each of evaluation tests. Here, in the following table, the locations indicated by * show non-evaluation or omitted evaluation results.

### < Loss Factor >

As to rectangular test pieces (127 mm × 12.7 mm × 1.6 mm), the loss factor was calculated in accordance with half band width method from peaks of secondary resonance frequency of the frequency response function measured according to a central excitation method as prescribed in JIS K7391. A system comprising Type 3160 as an oscillator, Type 2718 as an amplifier, Type 4810 as an excitation element, and Type 8001 as an accelerator sensor, all of which are manufactured by B & K, and a loss factor measurement software MS 18143 was used. The measurement environment was controlled with a thermostat PU-3J manufactured by ESPEC Corporation, and measurements were taken within the temperature ranges of from 0°C to 80°C. It can be evaluated that the larger the value of the loss factor, the higher the vibration-damping properties at that temperature. The results at 23°C and at 40°C are shown in each of the tables. As to Examples 7 and 8 and Comparative Examples 10 and 11, the evaluations were made at an even lower temperature (i.e., -30°C, -20°C or 0°C). The results are shown in Table 4.

### < Flexural Modulus and Flexural Strength >

As to rectangular test pieces (125 mm × 13 mm × 6.4 mm), as prescribed in ASTM D790, a flexural test was carried out with TENSILON manufactured by Orientec Co., LTD., TENSILON Tensile Tester RTC-1210A, with setting a crosshead speed to 3 mm/min to obtain a flexural modulus and a flexural strength. It can be evaluated that the higher the value of the flexural modulus, the higher the elasticity, and the higher the value of the flexural strength, the stronger the flexural strength. The results are shown in each of the tables.

### < Impact Resistance 1 >

As to rectangular test pieces (62 mm × 12.7 mm × 5 mm), a 2.5 mm notch was provided with a notching machine, and an impact test was carried out with an Izod impact tester manufactured by YASUDA SEIKI SEISAKUSHO LTD., as prescribed in ASTM D256. It can be evaluated that the larger the value of the impact resistance, the higher the impact resistance. The results are shown in Table 1.

### < Impact Resistance 2 >

As to rectangular test pieces (62 mm × 12.7 mm × 5 mm), a 2.5 mm notch was provided with a notching machine 189-PN manufactured by YASUDA SEIKI SEISAKUSHO LTD., and an impact test was carried out with an Izod impact tester manufactured by YASUDA SEIKI SEISAKUSHO LTD., as prescribed in ASTM D256. It can be evaluated that the larger the value of the impact resistance, the higher the impact resistance. The results are shown in each of the tables.

### < Deflection Temperature Under Load >

As to rectangular test pieces having dimensions of 125 mm × 13 mm × 6.4 mm, a deflection temperature under a load was obtained with a measurement instrument for a deflection temperature under a load, manufactured by YASUDA SEIKI SEISAKUSHO, LTD., when distorted for 0.254 mm, under the conditions of edgewise, heating rate of 2°C/minute, and a load of 1.8 MPa, as prescribed in ASTM D648. It can be evaluated that the higher the value of the deflection temperature under a load, the more excellent the heat resistance.

### [Table 1]

**Table 1**

| | | | | Ex. 1 | Comp. Ex. 1 | Comp. Ex. 2 | Comp. Ex. 3 | Ex. 2 | Comp. Ex. 4 | Comp. Ex. 5 |
|---|---|---|---|---|---|---|---|---|---|---|
| Polypropylene Resin | | | Parts by mass | 100 | 100 | 100 | 100 | 100 | 100 | 100 |
| Elastomer | MAH-SEBS (Prep. Ex. 1) | | Parts by mass | 15 | 0 | 0 | 0 | 15 | 0 | 0 |
| | SEBS | | Parts by mass | 0 | 15 | 0 | 15 | 0 | 15 | 0 |
| Filler | Mica | | Parts by mass | 20 | 20 | 0 | 20 | 20 | 20 | 0 |
| | Glass Fillers | | Parts by mass | 0 | 0 | 0 | 0 | 34 | 34 | 25 |
| Others | Maleic Anhydride | | Parts by mass | 0 | 0 | 0 | 0.075 | 0 | 0 | 0 |
| Amount of Maleic Anhydride Added | | | Parts by mass | 0.5 | 0 | 0 | 0 | 0.5 | 0 | 0 |
| Evaluation | Loss Factor | 23°C | - | 0.13 | 0.12 | 0.07 | 0.12 | 0.08 | 0.07 | 0.04 |
| | | 40°C | - | 0.13 | 0.10 | 0.05 | 0.10 | 0.07 | 0.05 | 0.03 |
| | Flexural Modulus | | GPa | 1.2 | 1.1 | 1.2 | 1.0 | 3.3 | 3.2 | 3.3 |
| | Impact Resistance 1 | | J/m | 44 | 42 | 84 | 40 | 57 | 45 | 54 |

### [Table 2]

**Table 2**

| | | | | Ex. 1 | Comp. Ex. 1 | Ex. 3 | Ex. 4 | Ex. 5 | Ex. 6 |
|---|---|---|---|---|---|---|---|---|---|
| Polyprolene Resin | | | Parts by mass | 100 | 100 | 100 | 100 | 100 | 100 |
| Elastomer | MAH-SEBS (Prep. Ex. 1) | | Parts by mass | 15 | 0 | 15 | 15 | 15 | 40 |
| | SEBS | | Parts by mass | 0 | 15 | 0 | 0 | 0 | 0 |
| Filler | Mica | | Parts by mass | 20 | 20 | 10 | 0 | 0 | 0 |
| | Glass Fillers | | Parts by mass | 0 | 0 | 0 | 20 | 0 | 11 |
| | Calcium Carbonate | | Parts by mass | 0 | 0 | 0 | 0 | 20 | 20 |
| Others | Maleic Anhydride | | Parts by mass | 0 | 0 | 0 | 0 | 0 | 0 |
| Amount of Maleic Anhydride Added | | | Parts by mass | 0.5 | 0 | 0.5 | 0.5 | 0.5 | 0.5 |
| Evaluation | Loss Factor | 23°C | - | 0.13 | 0.12 | 0.13 | 0.07 | 0.11 | 0.11 |
| | | 40°C | - | 0.13 | 0.10 | 0.13 | 0.06 | 0.09 | 0.09 |
| | Flexural Modulus | | GPa | 1.2 | 1.1 | 1.0 | 2.2 | 0.9 | 1.2 |
| | Impact Resistance 2 | | J/m | 38 | 37 | 42 | 57 | 34 | 51 |

### [Table 3]

**Table 3**

| | | | | Ex. 1 | Comp. Ex. 1 | Comp. Ex. 6 | Comp. Ex. 7 | Comp. Ex. 8 | Comp. Ex. 9 |
|---|---|---|---|---|---|---|---|---|---|
| Polyrolene Resin | | | Parts by mass | 100 | 100 | 100 | 100 | 100 | 100 |
| Elastomer | MAH-SEBS (Prep. Ex. 1) | | Parts by mass | 15 | 0 | 0 | 0 | 0 | 0 |
| | SEBS | | Parts by mass | 0 | 15 | 15 | 15 | 15 | 40 |
| Filler | Mica | | Parts by mass | 20 | 20 | 10 | 0 | 0 | 0 |
| | Glass Fillers | | Parts by mass | 0 | 0 | 0 | 20 | 0 | 11 |
| | Calcium Carbonate | | Parts by mass | 0 | 0 | 0 | 0 | 20 | 20 |
| Others | Maleic Anhydride | | Parts by mass | 0 | 0 | 0 | 0 | 0 | 0 |
| Amount of Maleic Anhydride Added | | | Parts by mass | 0.5 | 0 | 0.5 | 0.5 | 0.5 | 0.5 |
| Evaluation | Loss Factor | 23°C | - | 0.13 | 0.12 | 0.12 | 0.06 | 0.09 | 0.10 |
| | | 40°C | - | 0.13 | 0.10 | 0.10 | 0.04 | 0.07 | 0.07 |
| | Flexural Modulus | | GPa | 1.2 | 1.1 | 0.9 | 2.2 | 0.9 | 1.1 |
| | Impact Resistance 2 | | J/m | 38 | 37 | 40 | 44 | 33 | 40 |

### [Table 4]

**Table 4**

| | | | | Ex. 1 | Comp. Ex. 1 | Ex. 7 | Comp. Ex. 10 | Ex. 8 | Comp. Ex. 11 |
|---|---|---|---|---|---|---|---|---|---|
| Polypropylene Resin | | | Parts by mass | 100 | 100 | 100 | 100 | 100 | 100 |
| Elastomer | MAH-SEBS (Prep. Ex. 1) | | Parts by mass | 15 | 0 | 0 | 0 | 0 | 0 |
| | SEBS | | Parts by mass | 0 | 15 | 0 | 0 | 0 | 0 |
| | MAH-SIBS (Prep. Ex. 2) | | Parts by mass | 0 | 0 | 15 | 0 | 0 | 0 |
| | SIBS | | Parts by mass | 0 | 0 | 0 | 15 | 0 | 0 |
| | MAH-SEBC (Prep. Ex. 3) | | Parts by mass | 0 | 0 | 0 | 0 | 15 | 0 |
| | SEBC | | Parts by mass | 0 | 0 | 0 | 0 | 0 | 15 |
| Filler | Mica | | Parts by mass | 20 | 20 | 20 | 20 | 20 | 20 |
| | Glass Fillers | | Parts by mass | 0 | 0 | 0 | 0 | 0 | 0 |
| | Calcium Carbonate | | Parts by mass | 0 | 0 | 0 | 0 | 0 | 0 |
| Others | Maleic Anhydride | | Parts by mass | 0 | 0 | 0 | 0 | 0 | 0 |
| Amount of Maleic Anhydride Added | | | Parts by mass | 0.5 | 0 | 0.5 | 0 | 0.3 | 0 |
| Evaluation | Loss Factor | 23°C | - | 0.13 | 0.12 | * | * | * | * |
| | | 40°C | - | 0.13 | 0.10 | * | * | * | * |
| | Flexural Modulus | | GPa | 1.2 | 1.1 | * | * | * | * |
| | Impact Resistance 2 | | J/m | 38 | 37 | * | * | * | * |
| | Loss Factor | -20°C | - | * | * | 0.11 | 0.10 | * | * |
| | | 0°C | - | * | * | 0.11 | 0.08 | * | * |
| | Loss Factor | -30°C | - | * | * | * | * | 0.06 | 0.05 |
| | | 0°C | - | * | * | * | * | 0.07 | 0.05 |

### [Table 5]

**Table 5**

| | | | | Ex. 1 | Comp. Ex. 1 | Ex. 9 | Comp. Ex. 12 | Ex. 10 | Comp. Ex. 13 |
|---|---|---|---|---|---|---|---|---|---|
| Polypropylene Resin | | | Parts by mass | 100 | 100 | 100 | 100 | 100 | 100 |
| Elastomer | MAH-SEBS (Prep. Ex. 1) | | Parts by mass | 15 | 0 | 0 | 0 | 15 | 0 |
| | SEBS | | Parts by mass | 0 | 15 | 0 | 14.3 | 0 | 15 |
| | CDI-SEBS (Prep. Ex. 4) | | Parts by mass | 0 | 0 | 15 | 0 | 0 | 0 |
| Filler | Mica | | Parts by mass | 20 | 20 | 20 | 20 | 20 | 20 |
| | Glass Fillers | | Parts by mass | 0 | 0 | 0 | 0 | 0 | 0 |
| | Calcium Carbonate | | Parts by mass | 0 | 0 | 0 | 0 | 0 | 0 |
| Others | Maleic Anhydride | | Parts by mass | 0 | 0 | 0 | 0 | 0 | 0 |
| | CDI | | Parts by mass | 0 | 0 | 0 | 0.7 | 0 | 0 |
| Amount of Maleic Anhydride Added | | | Parts by mass | 0.5 | 0 | 0.5 | 0 | 0.5 | 0 |
| Amount of CDI Added | | | Parts by mass | 0 | 0 | 5 | 0 | 0 | 0 |
| Evaluation | Loss Factor | 23°C | - | 0.13 | 0.12 | 0.10 | 0.09 | 0.13 | 0.11 |
| | | 40°C | - | 0.13 | 0.10 | 0.12 | 0.11 | 0.13 | 0.10 |
| | Flexural Modulus | | GPa | 1.2 | 1.1 | 1.3 | 1.2 | 1.2 | 1.1 |
| | Impact Resistance 2 | | J/m | 38 | 37 | 45 | 43 | 38 | 37 |

### [Table 6]

**Table 6**

| | | | | Ex. 6 | Ex. 11 | Ex. 12 | | Ex. 13 | |
|---|---|---|---|---|---|---|---|---|---|
| | | | | | | Preliminary Kneaded Product A | Preliminary Kneaded Product B | Preliminary Kneaded Product A | Preliminary Kneaded Product B |
| Polypropylene Resin | | | Parts by mass | 100 | 100 | 50 | 50 | 50 | 50 |
| Elastomer | MAH-SEBS (Prep. Ex. 1) | | Parts by mass | 40 | 40 | 0 | 40 | 0 | 52 |
| | SEBS | | Parts by mass | 0 | 0 | 0 | 0 | 0 | 0 |
| Filler | Mica | | Parts by mass | 0 | 0 | 0 | 0 | 0 | 0 |
| | Glass Fillers | | Parts by mass | 11 | 11 | 11 | 0 | 7 | 0 |
| | Calcium Carbonate | | Parts by mass | 20 | 20 | 0 | 20 | 0 | 25 |
| Others | Maleic Anhydride-Modified PP | | Parts by mass | 0 | 0.7 | 0.7 | 0 | 0.5 | 0 |
| Amount of Maleic Anhydride Added | | | Parts by mass | 0.5 | 0.5 | 0.5 | | 0.5 | |
| Evaluation | Loss Factor | 23°C | - | 0.11 | 0.10 | 0.08 | | 0.12 | |
| | | 40°C | - | 0.09 | 0.10 | 0.07 | | 0.09 | |
| | Flexural Modulus | | GPa | 1.2 | 1.3 | 1.6 | | 1.3 | |
| | Impact Resistance 2 | | J/m | 51 | 51 | 51 | | 60 | |
| | Flexural Strength | | MPa | 30 | 33 | 43 | | 33 | |
| | Deflection Temperature Under Load | | °C | 69 | 85 | 122 | | 93 | |

The details of each of the components shown in Preparation Examples and each of the tables are as follows.

Polypropylene resin: (trade name: BC03B, manufactured by Nippon Polypropylene Corporation, a polypropylene homopolymer, MFR: 30 g/10 min, melting point: 160°C)
SEBS: (trade name: S.O.E. S1605, manufactured by Asahi Kasei Chemicals Corporation)
SIBS: (trade name: SIBSTAR 103T, manufactured by KANEKA CORPORATION)
SEBC: (trade name: DUNARON 4600P, manufactured by JSR)
Polycarbodiimide: (trade name: Carbodilite HMV-15CA, manufactured by Nisshinbo)
Maleic Anhydride: (trade name: Maleic Anhydride, manufactured by Wako Pure Chemicals Industries, Ltd.)
Dicumyl Peroxide (trade name: PERCUMYL D, manufactured by NOF CORPORATION)
Mica: (trade name: A-21S, manufactured by YAMAGUCHI MICA CO., LTD.)
Glass Fillers: (trade name: T-480, manufactured by Nippon Electric Glass Co., Ltd.)
Calcium Carbonate: (trade name: WHITON H, manufactured by Shiraichi Calcium Kaisha, Ltd.)
Maleic Anhydride-Modified PP (Polypropylene): (trade name: Umex 1001, manufactured by Sanyo Chemical Industries, Ltd.)

In Table 1, when Example 1 is compared with Comparative Example 2, it could be seen that according to the present invention, the vibration-damping properties at room temperature (23°C) and the vibration-damping properties in a high-temperature region (40°C) can be improved, while maintaining the elastic modulus. Further, when Examples 1 and 2 are compared with Comparative Examples 2 and 4 where the conventional elastomer SEBS was used, it could be seen that according to the present invention not only the vibration-damping properties but also the impact resistance can be improved. In addition, it can be seen from Comparative Example 3 that the effects of the present invention cannot be obtained even if maleic anhydride is simply added without reinforcing the interface between the elastomer and the filler.

It could be seen from Tables 2 and 3 that the effects of the present invention are exhibited with various filler other than mica, and that when the elastomer having a polar functional group is not used, the satisfaction of both of the vibration-damping properties and the elastic modulus or the strength cannot be accomplished even when the kinds of the fillers are changed. The superiority of the present invention could be confirmed from Example 5 of Table 2 and Comparative Example 8 of Table 3 even when the kind of the filler were calcium carbonate.

It could be seen from Table 4 that when the elastomer of the elastomer having a polar functional group is changed to SIBS or SEBC, the vibration-damping properties are improved in low-temperature regions of -30°C, -20°C or 0°C.

It could be seen from the comparison of Example 9 and Comparative Example 12 of Table 5 that the effects of the present invention are exhibited even when the polar functional groups are changed. Further, it could be seen from the results of Example 1 and Example 10 of Table 5 that the evaluation results of the molded articles of the polypropylene resin compositions obtained were of the same level when the components constituting the polypropylene resin composition were melt-kneaded in one batch process, or when the polypropylene resin were melt-kneaded afterwards.

From the comparisons of each of the examples of Table 6, the strength of the molded article is improved by blending a maleic anhydride-modified polyolefin, or the flexural strength of the molded article is further improved (Example 12), and the vibration-damping properties can be increased while maintaining the flexural strength (Example 13) by preparing each of preliminary kneaded products A and B containing given components, and then melt-kneading the two preliminary kneaded products. It is anticipated from the above matters that the interactions of are promoted between the components in each of the preliminary kneaded products, and consequently leading to the improvements of the properties of the molded articles. In the field of the present invention, it has been known that the vibration-damping properties and the strength are in a trade-off relationship, so that the addition of a component for increasing the strength has been avoided, from the viewpoint of securing the vibration-damping properties. However, according to the characteristic method for production of the present invention, both of the vibration-damping properties and the strength could be secured at satisfactory levels even when the above components were added.

### INDUSTRIAL APPLICABILITY

The polypropylene resin composition of the present invention can be suitably used in manufactured articles of audio equipment, electric appliances, transportation vehicles, construction buildings, industrial equipment, and the like.

## Claims

1. A polypropylene resin composition comprising a polypropylene resin, an elastomer having a polar functional group, and a filler.

2. The polypropylene resin composition according to claim 1, wherein the polar functional group of the elastomer having a polar functional group is one or more members selected from the group consisting of an ester group, an amide group, a hydroxyl group, a carboxy group, an amino group, an acid anhydride group, an epoxy group and a carbodiimide group.

3. The polypropylene resin composition according to claim 1 or 2, wherein the elastomer having a polar functional group is one or more elastomers selected from the group consisting of maleic anhydride-modified polystyrene-hydrogenated polybutadiene copolymers (SEBS), maleic anhydride-modified polystyrene-isobutylene-polystyrene block copolymers (SIBS), maleic anhydride-modified polystyrene-ethylene-butylene-polyolefin block copolymers (SEBC), and epoxy-modified polystyrene-hydrogenated polybutadiene copolymers (SEBS).

4. The polypropylene resin composition according to any one of claims 1 to 3, wherein the filler is one or more fillers selected from the group consisting of mica, talc, glass fillers, calcium carbonate, cellulose fillers, aluminum hydroxide, magnesium hydroxide, and silica.

5. The polypropylene resin composition according to any one of claims 1 to 4, wherein in the polypropylene resin composition the content of the elastomer having a polar functional group is 5 parts by mass or more and 60 parts by mass or less, and the content of the filler is 5 parts by mass or more and 70 parts by mass or less, based on 100 parts by mass of a polypropylene resin.

6. A method for producing a polypropylene resin composition, comprising melt-kneading a polypropylene resin with additives comprising a melt-kneaded product of an elastomer having a polar functional group and a filler.

7. The method for producing a polypropylene resin composition according to claim 6, comprising:
step (1) melt-kneading a mixture made of an elastomer having a polar functional group and a filler, and
step (2) melt-kneading a kneaded product obtained in the above step (1) and a polypropylene resin.

8. A method for producing a polypropylene resin composition comprising melt-kneading an elastomer having a polar functional group, a filler, and a polypropylene resin.

9. The method for producing a polypropylene resin composition according to claim 8, wherein a preliminary kneaded product A comprising a polypropylene resin and a filler is melt-kneaded with a preliminary kneaded product B comprising a polypropylene resin, an elastomer having a polar functional group and a filler, whereby the melt-kneading of the elastomer having a polar functional group, the filler, and the polypropylene resin is carried out.

10. The method for producing a polypropylene resin composition according to claim 9, wherein the preliminary kneaded product A further comprises a maleic anhydride-modified polyolefin.

11. The method for producing a polypropylene resin composition according to any one of claims 6 to 10, wherein the elastomer having a polar functional group is one or more elastomers selected from the group consisting of maleic anhydride-modified polystyrene-hydrogenated polybutadiene copolymers (SEBS), maleic anhydride-modified polystyrene-isobutylene-polystyrene block copolymers (SIBS), maleic anhydride-modified polystyrene-ethylene-butylene-polyolefin block copolymers (SEBC), and epoxy-modified polystyrene-hydrogenated polybutadiene copolymers (SEBS).

12. The method for producing a polypropylene resin composition according to any one of claims 6 to 11, wherein the filler is one or more fillers selected from the group consisting of mica, talc, glass fillers, calcium carbonate, cellulose fillers, aluminum hydroxide, magnesium hydroxide, and silica.

13. Additives comprising a melt-kneaded product of an elastomer having a polar functional group and a filler.

14. The additives according to claim 13, wherein the elastomer having a polar functional group is one or more elastomers selected from the group consisting of maleic anhydride-modified polystyrene-hydrogenated polybutadiene copolymers (SEBS), maleic anhydride-modified polystyrene-isobutylene-polystyrene block copolymers (SIBS), maleic anhydride-modified polystyrene-ethylene-butylene-polyolefin block copolymers (SEBC), and epoxy-modified polystyrene-hydrogenated polybutadiene copolymers (SEBS).

15. The additives according to claim 13 or 14, wherein the filler is one or more fillers selected from the group consisting of mica, talc, glass fillers, calcium carbonate, cellulose fillers, aluminum hydroxide, magnesium hydroxide, and silica.

16. A vibration-damping material comprising a polypropylene resin composition as defined in any one of claims 1 to 5, or a polypropylene resin composition produced by a method for producing a polypropylene resin composition as defined in any one of claims 6 to 12.
